# FASCICULE DE BREVET EUROPEEN

(11) **EP 1 314 614 B1**
(45) Date de publication et mention de la délivrance du brevet: **16.03.2005**
(21) Numéro de dépôt: 02292895.6
(22) Date de dépôt: 21.11.2002
(51) Int. Cl.: B60R 19/12

(54) **Ensemble de pare-chocs et une poutre rigide d'impact pour véhicules automobiles**
Stossfängeranordnung für Kraftfahrzeuge
Bumper and crash bar assembly for vehicles

(30) Priorité: 23.11.2001 FR 0115201
(43) Date de publication de la demande: 28.05.2003
(73) Titulaire: Faurecia Bloc Avant, 92000 Nanterre (FR); Peugeot Citroen Automobiles SA, 92200 Neuilly sur Seine (FR)
(72) Inventeur: Berne, Sébastien, 25200 Montbeliard (FR); Riviere, Caroline, 25700 Valentigney (FR); Pinard, Eric, 70400 Luze (FR); Fromentin, Bernard, 78620 L'etang-la-Ville (FR); Bellini, Lionel David, 92100 Boulogne-Billancourt (FR); Endrizzi, Silvio, 92120 Montrouge (FR)
(74) Mandataire: Domenego, Bertrand

(56) Documents cités:
- EP-A- 0 611 682
- EP-A- 1 036 715
- EP-A- 1 118 530
- US-B1- 6 199 924

## Description

La présente invention concerne un ensemble pour véhicule automobile comprenant une peau de pare-chocs et une poutre rigide d'impact dont au moins un tronçon central est disposé en arrière de la peau de pare-chocs par rapport au sens de marche du véhicule pour former une zone inférieure de percussion du tibia d'un piéton, la peau de pare-chocs comprenant une partie centrale avant et deux parties latérales prolongeant la partie centrale avant vers l'arrière.

Dans un ensemble du type précité, la poutre d'impact permet de percuter un piéton sous son genou et plus précisément au niveau de son tibia. Les risques de blessures graves des genoux d'un piéton percuté sont donc réduits.

Un tel ensemble permet donc de satisfaire aux futures réglementations visant à limiter les blessures infligées aux piétons en cas de choc frontal à faible vitesse.

Le comportement d'un véhicule automobile devrait également satisfaire certaines contraintes lors de chocs standards, dont le choc dit « réparabilité » ou « Danner » à 15 km/h contre un obstacle.

Lors d'un tel choc, le châssis d'un véhicule et en particulier ses longerons ne doivent pas être déformés plastiquement. De manière plus générale, le coût des réparations induites par ce choc frontal doit être limité.

Un ensemble du type précité est connu de WO-00/58 144. La poutre rigide d'impact y est formée par un carénage sous moteur. Cette pièce est une partie du berceau moteur destinée à fermer inférieurement le compartiment moteur.

Dans cet ensemble, la poutre rigide d'impact n'est pas montée sur les longerons du châssis et ne leur transmet donc pas d'effort lors d'un choc réparabilité.

Toutefois, lors d'un tel choc, on constate que le carénage sous moteur est soumis à des efforts importants conduisant à son endommagement.

Or, une telle pièce structurelle du véhicule est particulièrement coûteuse. La remise en état d'un véhicule équipé d'un tel ensemble après un choc réparabilité s'avère donc encore trop coûteuse.

Un but de l'invention est de résoudre ce problème en fournissant un ensemble du type précité qui induise des coûts de réparation plus réduits lors d'un choc réparabilité.

A cet effet, l'invention a pour objet un ensemble du type précité, caractérisé en ce que la poutre d'impact est montée sur les parties latérales de la peau de pare-chocs.

Selon des modes particuliers de réalisation, l'ensemble peut comprendre l'une ou plusieurs des caractéristiques suivante(s), prise(s) isolément ou selon toutes les ensembles techniquement possibles :
- la poutre d'impact est montée sur chaque partie latérale par l'intermédiaire d'une pièce de renfort fixée latéralement à l'intérieur de ladite partie latérale,
- la poutre d'impact comprend des extrémités par lesquelles elle est montée sur les parties latérales de la peau de pare-chocs,
- chaque pièce de renfort comprend un manchon de réception d'une extrémité de la poutre d'impact,
- les extrémités de la poutre d'impact sont situées à un niveau supérieur à celui du tronçon central de la poutre d'impact,
- la poutre d'impact comprend des zones de moindre résistance,
- la poutre d'impact comprend un tube,
- le tube est métallique, et
- l'ensemble comprend en outre une calandre de protection d'un radiateur, au moins une partie inférieure de la calandre étant disposée entre le tronçon central de la poutre d'impact et la peau de pare-chocs.

L'invention a en outre pour objet un véhicule automobile comprenant une extrémité longitudinale avant, caractérisé en ce qu'il comprend un ensemble tel que défini ci-dessus assemblé à l'extrémité longitudinale avant.

L'invention a en outre pour objet un procédé de construction d'un véhicule tel que défini ci-dessus, caractérisé en ce qu'il comprend les étapes de :
- fournir un ensemble tel que défini ci-dessus, puis
- assembler ledit ensemble à l'extrémité avant d'un véhicule automobile.

L'invention sera mieux comprise à la lecture de la description qui va suivre, donnée uniquement à titre d'exemple, et faite en se référant aux dessins annexés, sur lesquels :
- la figure 1 est une vue schématique en perspective d'un ensemble selon l'invention,
- la figure 2 est une vue schématique en perspective illustrant la poutre d'impact de l'ensemble de la figure 1,
- la figure 3 est une section schématique partielle prise suivant le plan III-III de la figure 1, et
- la figure 4 est une section schématique longitudinale et partielle de l'extrémité avant d'un véhicule automobile équipé de l'ensemble de la figure 1.

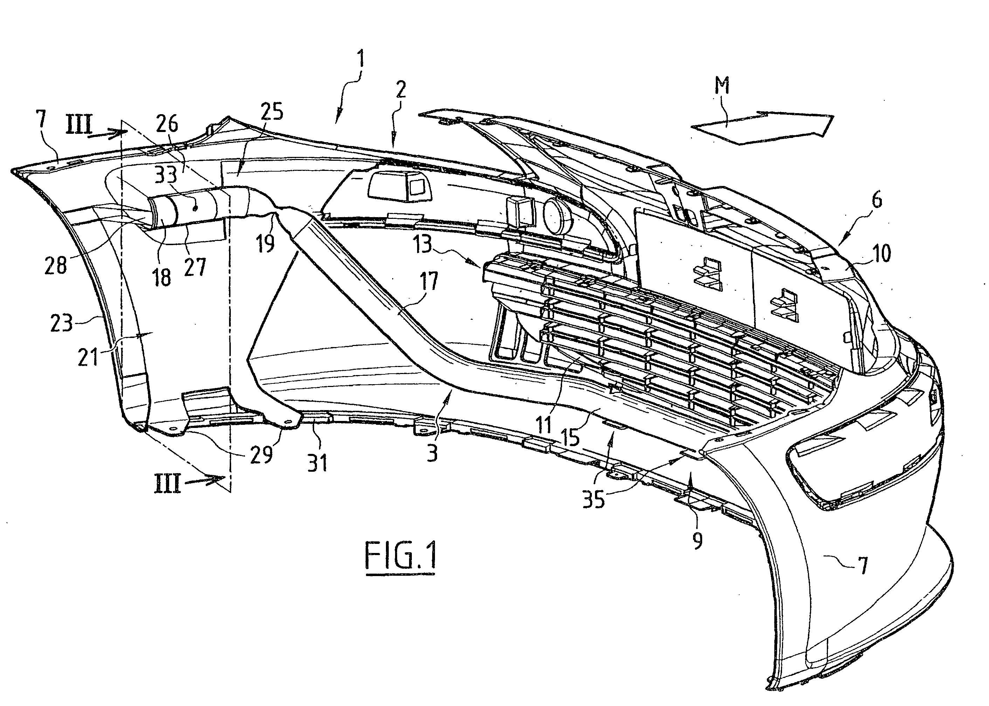

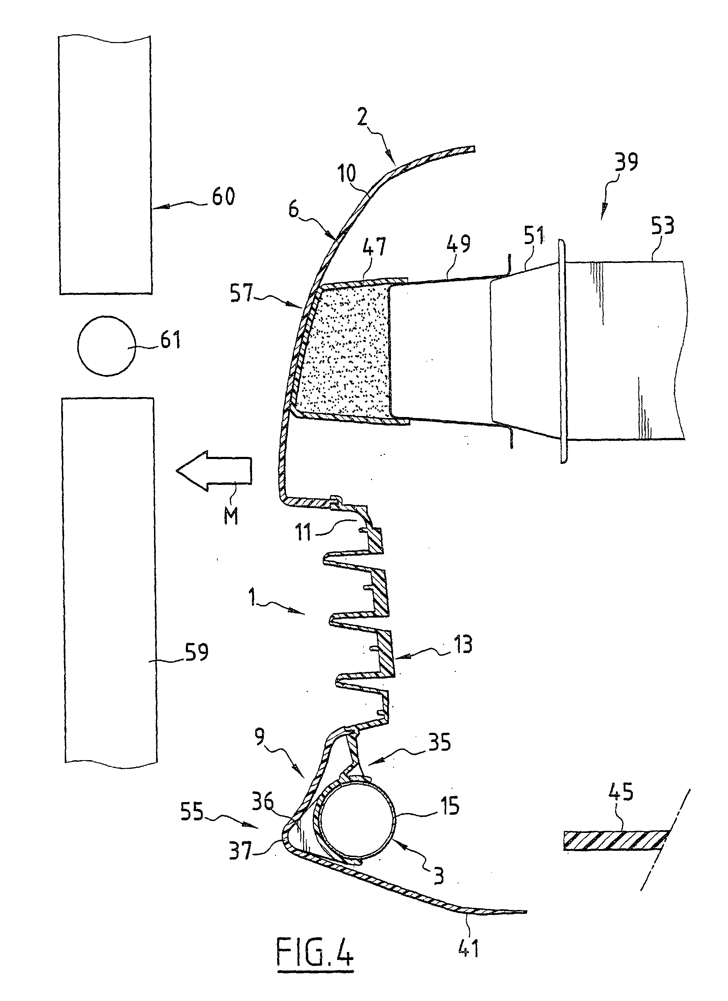

Dans tout ce qui suit, les termes « avant », « arrière », « droite », « gauche », « supérieur », inférieur » et « longitudinal » s'entendent par rapport à la position d'un conducteur et du sens de marche du véhicule automobile. Ce sens est matérialisé par la flèche M sur les figures 1 et 4.

La figure 1 illustre schématiquement un ensemble 1 destiné à équiper l'extrémité longitudinale avant d'un véhicule automobile.

L'ensemble 1 a une structure et une forme sensiblement symétriques par rapport à un plan longitudinal vertical et médian.

Cet ensemble 1 comprend principalement une peau 2 de pare-chocs et une poutre rigide d'impact 3.

La peau 2 de pare-chocs est une pièce réalisée par exemple par moulage de matière plastique. La peau 2 comprend une partie centrale avant ou bouclier 6 et deux parties latérales ou crosses 7. Les crosses 7 prolongent les extrémités latérales du bouclier 6 vers l'arrière de sorte que la peau 2 a en vue de dessus sensiblement une forme de U ouvert vers l'arrière.

De manière classique, le bouclier 6 présente en vue de dessus une forme galbée de concavité dirigée vers l'arrière. En outre, le bouclier 6 comprend une région inférieure ou spoiler 9 et une région supérieure 10. Une ouverture 11 est ménagée dans le bouclier 6 entre le spoiler 9 et la région supérieure 10 pour permettre le passage d'un flux d'air pour balayer le radiateur du véhicule automobile.

Cette ouverture 11 est recouverte par une calandre 13 sous forme d'une grille. Cette calandre 13 est disposée en arrière du bouclier 6 et fixée à celui-ci de manière classique pour masquer et protéger le radiateur.

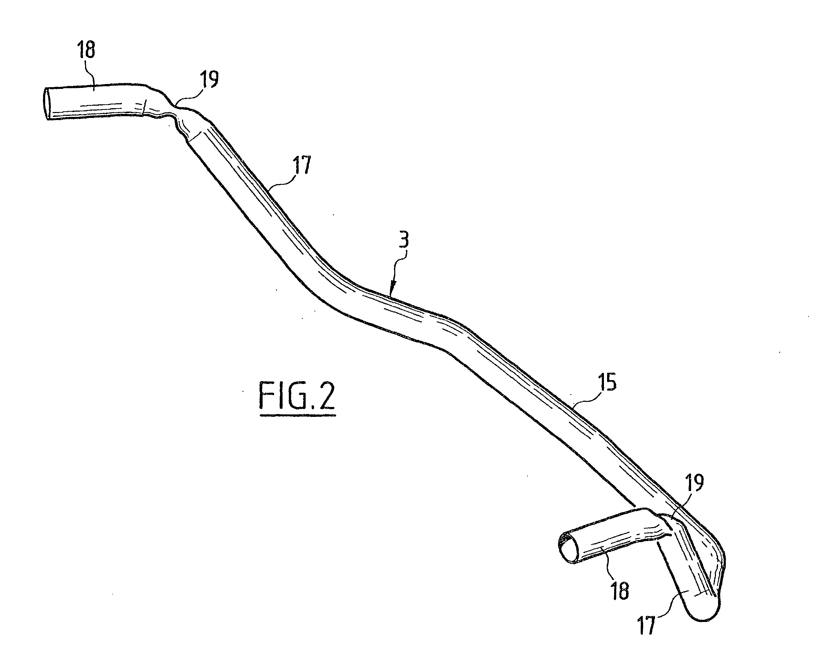

Comme illustré plus particulièrement par la figure 2, la poutre d'impact 3 est constituée par un tube cintré. Le tube 3 est réalisé par exemple en aluminium et présente une section courante circulaire.

Le tube 3 comprend :
- un tronçon inférieur central 15 cintré pour présenter une concavité dirigée vers l'arrière et ainsi un galbe correspondant sensiblement à celui du spoiler 9 du bouclier 6,
- deux tronçons intermédiaires obliques 17 qui prolongent le tronçon central inférieur 15 et qui sont inclinés vers le haut et latéralement vers l'extérieur, et
- deux extrémités 18 qui prolongent les tronçons intermédiaires 17 vers l'arrière et qui s'étendent sensiblement horizontalement.

Une zone de moindre résistance 19 est ménagée par écrasement local du tube 3 entre chaque extrémité 18 et le tronçon intermédiaire 17 correspondant, au niveau du coude permettant à l'extrémité 18 de s'étendre horizontalement alors que le tronçon oblique 17 est incliné par rapport à un plan horizontal.

L'ensemble 1 comprend en outre deux plaques 21 de renfort des crosses 7 de la peau 2.

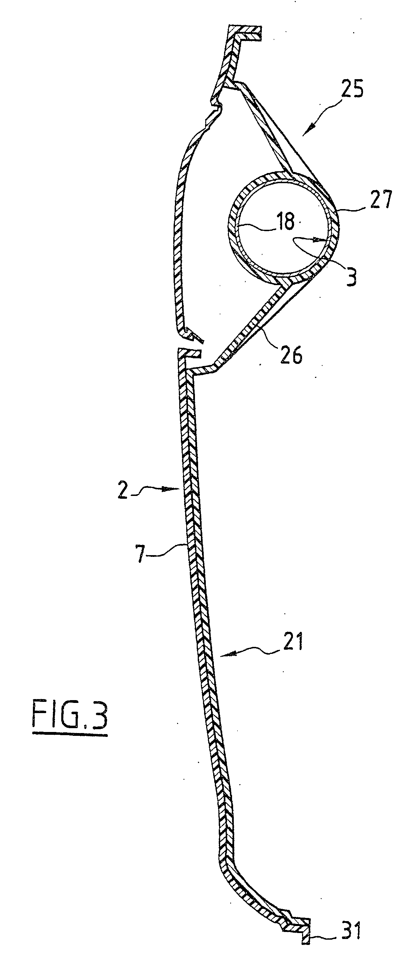

Du fait de la symétrie précitée, seule la plaque 21 gauche sera décrite en regard des figures 1 et 3.

La plaque 21 gauche est par exemple réalisée en matière plastique comprenant une charge de renfort, par exemple une charge de fibres de verre.

La plaque 21 s'étend latéralement à l'intérieur de la crosse 7 gauche sensiblement sur toute la hauteur de cette dernière.

Par ailleurs, elle s'étend depuis le bord arrière 23 de la crosse 7 vers l'avant. La région supérieure 25 de la plaque de renfort 21 gauche s'étend vers l'avant sensiblement jusqu'au bouclier 6.

Comme illustré par la figure 3, la plaque de renfort 21 épouse sensiblement la forme de la crosse 7 gauche et est plaquée contre la crosse 7, sauf au niveau d'un décrochement vers l'intérieur 26 de la plaque 21. La plaque 21 comporte au niveau de ce décrochement 26 un manchon cylindrique circulaire 27 d'axe horizontal. Le manchon 27 débouche vers l'avant et vers l'arrière. Le décrochement 26 comprend en outre une butée 28 disposée en arrière du manchon 27.

La plaque 21 comporte en outre deux pattes inférieures 29 de fixation par vissage au bord inférieur 31 de la crosse 7 gauche.

Dans l'ensemble 1 de la figure 1, la poutre d'impact 3 est disposée à l'intérieur de la peau 2 de pare-chocs en s'étendant à l'arrière de son bouclier 6 .

De plus, les extrémités 18 de la poutre 3 sont chacune reçues dans le manchon 27 d'une plaque de renfort 21 et prennent appui en arrière contre la butée 28 correspondante. Une vis transversale 33 traverse éventuellement la paroi du manchon 27 et l'extrémité 18 correspondante pour les solidariser.

Le tronçon central inférieur 15 de la poutre 3 s'étend en arrière et à l'intérieur du spoiler 9.

Comme on le voit sur les figures 1 et 4, la calandre 13 comporte deux organes inférieurs d'encliquetage 35 espacés transversalement l'un de l'autre. Ces deux organes 35 s'étendent vers le bas jusque dans le spoiler 9 pour recevoir le tronçon inférieur 15 de la poutre 3 par enclenchement élastique et le maintenir par rapport à la peau 2.

En outre et comme illustré par la figure 4, les organes d'encliquetage 35 comportent une saillie avant 36 d'appui sur le spoiler 9. Chaque saillie 36 est disposée entre la région 37 la plus en avant du spoiler 9 et le tronçon central inférieur 15 de la poutre 3 en prenant appui sur ces deux pièces.

L'ensemble 1 est destiné à équiper l'extrémité avant 39 d'un véhicule automobile, comme illustré par la figure 4.

L'extrémité avant 39 comprend en arrière du spoiler 9 le berceau 45 du moteur dont une seule pièce est schématisée.

En outre, l'extrémité longitudinale avant 39 du véhicule automobile comprend derrière la région supérieure 10 de la peau 2 de pare-chocs successivement de l'avant vers l'arrière :
- un premier absorbeur de chocs 47 qui s'étend transversalement sensiblement sur toute la largeur du bouclier 6 de la peau 2 et qui est par exemple réalisé en mousse,
- une poutre de pare-chocs 49 qui s'étend transversalement sensiblement sur toute la largeur du bouclier 6 et qui peut être réalisée en une matière plastique éventuellement renforcée par une charge ou en métal,
- deux deuxièmes absorbeurs de chocs 51, dont un seul est visible sur la figure 4, ces deux absorbeurs de chocs 51 étant disposés l'un à côté de l'autre et étant reliés chacun à l'extrémité avant d'un des deux longerons 53 du châssis du véhicule.

Le tronçon central inférieur 15 de la poutre d'impact 3 forme avec les saillies 36 des organes d'encliquetage 35 et la région avant 37 du spoiler 9 une première zone inférieure de percussion 55.

La poutre supérieure 49 forme avec l'absorbeur de chocs 47 et la région supérieure 10 du bouclier avant 6 une deuxième zone supérieure de percussion 57.

En cas de choc frontal avec un piéton, la zone inférieure de percussion 55 entre en contact avec le tibia 59 de la ou de chaque jambe 60 du piéton (figure 4).

La deuxième zone d'impact 57 entre elle en contact avec le genou 61. Ces entrées en contact avec le tibia et le genou se produisent simultanément car la seconde zone de percussion 57 est située à l'aplomb de la première zone de percussion 55, puisque les saillies 36 permette de rattraper le jeu entre le tronçon central 15 et la région 37 du spoiler 9.

L'absorbeur de chocs 47 étant moins rigide que la poutre d'impact 3 et les saillies 36 des organes d'encliquetage 35, la zone supérieure de percussion 57 recule alors par rapport à la zone inférieure de percussion.

Ainsi, on constate que la flexion subie par le genou 61 est inférieure à 15° si bien que les dommages infligés au genou 61 sont réduits. L'ensemble 1 permet donc de satisfaire aux contraintes du choc piéton. On notera que ce résultat pourrait être obtenu par percussion de la jambe 60 par la zone supérieure de percussion 57 sous le genou 61.

En cas de choc réparabilité, les absorbeurs de choc 47 et 51 absorbent l'énergie du choc en assurant ainsi que le châssis du véhicule et en particulier les longerons 53 ne subissent pas de déformation plastique, comme cela est connu.

Pour ce qui concerne la partie inférieure de l'extrémité avant 39 du véhicule automobile, tous les efforts subis par la poutre d'impact 3 lors d'un tel choc réparabilité sont repris par les crosses latérales 7 et les plaques de renfort 21 et ne sont pas transmis vers des éléments structurels tels que des parties du berceau moteur 45 comme le carénage sous moteur. Cette reprise d'efforts est assurée par appui des extrémités 18 de la poutre 3 transversalement et verticalement sur les manchons 27 et par appui longitudinal vers l'arrière sur les butées 28. Le montage de la poutre 3 sur les crosses 7 permet donc de limiter les coûts de remise en état après un choc réparabilité.

De plus, lors d'un tel choc, la poutre 3 va se plier au niveau des zones de moindre résistance 19 de sorte que le tronçon central inférieur 15 va reculer. Une telle déformation plastique de la poutre 3 permet également d'éviter de transmettre les efforts subis par la poutre 3 à des parties du véhicule autres que celles de l'ensemble 1, par exemple les ailes latérales de la carrosserie ou les éléments de support de ces ailes, au point de les déformer plastiquement ou de les rompre.

L'ensemble 1 possède donc un tronçon inférieur 15 de poutre d'impact 3 suffisamment rigide pour limiter les blessures en cas de choc piéton. Pour autant, la poutre 3 et en particulier sa liaison au reste du véhicule automobile sont suffisamment souples pour se déformer en cas de choc réparabilité en absorbant l'essentiel du choc et sans transmettre à des éléments structurels du véhicule des efforts produisant des endommagements.

Ainsi en cas de choc réparabilité, les risques d'endommagement d'une partie coûteuse du véhicule autre que l'ensemble 1 sont réduits dans la partie inférieure de l'extrémité longitudinale avant 39 du véhicule automobile.

En outre, la poutre d'impact 3 étant réalisée sous forme d'un tube monté par emmanchement sur les crosses 7, le coût de l'ensemble 1 est particulièrement réduit.

De plus, cet ensemble 1 forme un module préassemblé qui peut être manipulé et transporté facilement, ce qui permet de simplifier le procédé de construction du véhicule automobile.

Ainsi, pour construire un tel véhicule, on préassemble l'ensemble 1 puis on vient l'assembler à l'extrémité avant 39 du véhicule automobile. Cet assemblage peut être assuré de manière classique par l'intermédiaire de goussets de liaison des bords supérieurs des crosses 7 aux ailes latérales de la carrosserie du véhicule. En outre, les pattes 29 permettent également de lier les bords inférieurs des crosses 7 à l'extrémité avant 39.

On notera également que les saillies 36 de la calandre 13 permettent d'assurer que la zone inférieure de percussion 55 reste en avant de la zone supérieure de percussion 57 au cours d'un choc piéton, et donc que les sollicitations exercées sur le genou 61 restent acceptables.

Dans l'exemple ci-dessus cela est obtenu grâce au fait que, la zone inférieure de percussion 55 est, en l'absence d'un choc, à la verticale de la zone supérieure de percussion 57.

Toutefois, il peut être préférable pour des raisons esthétiques que la zone supérieure de percussion 57 soit, en l'absence de choc, située en avant de la zone inférieure de percussion 55. Le comportement en cas de choc piéton décrit ci-dessus sera cependant satisfait grâce au choix d'un absorbeur 47 adéquat.

Dans d'autres variantes, les saillies 36 de la calandre 13 permettront, en l'absence de choc, à la zone inférieure de percussion 55 d'être disposée en avant de la zone supérieure de percussion 57.

On notera que la calandre peut comprendre un nombre quelconque d'organes d'encliquetage 35, par exemple plus de deux ou un seul. Indépendamment du nombre d'organe d'encliquetage 35, le rattrapage des jeux entre le tronçon central 15 et la zone 37 peut être assuré par une ou plusieurs saillie(s) 36 s'étendant sur l'essentiel de la longueur du tronçon 15. Ainsi, une seule saillie 36 peut éventuellement être commune à plusieurs organes 35.

Dans des variantes, la poutre 3 peut avoir une section différente de celle représentée, peut être pleine et/ou peut être réalisée en un matériau non métallique, par exemple en matière plastique.

Dans encore une autre variante, les plaques de renfort 21 sont constituées par les crosses 7 elles-même qui sont renforcées, par exemple par la présence d'une charge de fibres de verre.

## Revendications

1. Ensemble (1) pour véhicule automobile comprenant une peau (2) de pare-chocs et une poutre rigide d'impact (3) dont au moins un tronçon central (15) est disposé en arrière de la peau de pare-chocs par rapport au sens de marche (M) du véhicule pour former une zone inférieure (55) de percussion du tibia d'un piéton, la peau (2) de pare-chocs comprenant une partie centrale avant (6) et deux parties latérales (7) prolongeant la partie centrale avant (6) vers l'arrière, **caractérisé en ce que** la poutre d'impact (3) est montée sur les parties latérales (7) de la peau de pare-chocs (2).

2. Ensemble selon la revendication 1, **caractérisé en ce que** la poutre d'impact (3) est montée sur chaque partie latérale (7) par l'intermédiaire d'une pièce de renfort (21) fixée latéralement à l'intérieur de ladite partie latérale (7).

3. Ensemble selon la revendication 1 ou 2, **caractérisé en ce que** la poutre d'impact (3) comprend des extrémités (18) par lesquelles elle est montée sur les parties latérales (7) de la peau de pare-chocs (2).

4. Ensemble selon les revendications 2 et 3 prises ensemble, **caractérisé en ce que** chaque pièce de renfort (21) comprend un manchon (27) de réception d'une extrémité (18) de la poutre d'impact (3).

5. Ensemble selon la revendication 3 ou 4, **caractérisé en ce que** les extrémités (18) de la poutre d'impact sont situées à un niveau supérieur à celui du tronçon central (15) de la poutre d'impact (3).

6. Ensemble selon l'une des revendications précédentes, **caractérisé en ce que** la poutre d'impact (3) comprend des zones (19) de moindre résistance.

7. Ensemble selon une des revendications précédentes, **caractérisé en ce que** la poutre d'impact comprend un tube (3).

8. Ensemble selon la revendication 7, **caractérisé en ce que** le tube (3) est métallique.

9. Ensemble selon l'une des revendications précédentes, **caractérisé en ce qu'**il comprend en outre une calandre (13) de protection d'un radiateur, au moins une partie inférieure (36) de la calandre (13) étant disposée entre le tronçon central (15) de la poutre d'impact (3) et la peau de pare-chocs (2).

10. Véhicule automobile comprenant une extrémité longitudinale avant (39), **caractérisé en ce qu'**il comprend un ensemble (1) selon l'une des revendications précédentes monté à l'extrémité longitudinale avant (39).

11. Procédé de construction d'un véhicule selon la revendication 10, **caractérisé en ce qu'**il comprend les étapes de :
- fournir un ensemble (1) selon l'une des revendications 1 à 9, puis
- assembler ledit ensemble (1) à l'extrémité avant (39) d'un véhicule automobile.

## Patentansprüche

1. Konstruktion (1) für ein Kraftfahrzeug, aufweisend eine Stoßfänger-Außenhaut (2) und einen starren Stoßrahmen (3), von dem mindestens ein Mittelabschnitt (15) in Bezug zur Fahrrichtung (M) des Fahrzeugs hinter der Stoßfänger-Außenhaut angeordnet ist zum Ausbilden eines unteren Bereichs (55) zum Anschlagen an das Schienbein eine Fußgängers, wobei die Stoßfänger-Außenhaut (2) einen vorderen Mittelabschnitt (6) und zwei Seitenabschnitte (7) aufweist, welche den Mittelabschnitt (6) in Richtung nach hinten verlängern, **dadurch gekennzeichnet, dass** der Stoßrahmen (3) an die Seitenabschnitte (7) der Stoßfänger-Außenhaut (2) montiert ist.

2. Konstruktion gemäß Anspruch 1, **dadurch gekennzeichnet, dass** der Stoßrahmen (3) an jeden Seitenabschnitt (7) über ein 'zwischenliegendes Verstärkungsstücks (21) montiert ist, welches am Inneren des Seitenabschnitts (7) seitlich montiert ist.

3. Konstruktion gemäß Anspruch 1 oder 2, **dadurch gekennzeichnet, dass** der Stoßrahmen (3) Enden (18) aufweist, über welche er an die Seitenabschnitte (7) der Stoßfängeraußenhaut (2) montiert ist.

4. Konstruktion gemäß den beiden Ansprüchen 2 und 3, **dadurch gekennzeichnet, dass** jedes Verstärkungsstück (21) eine Muffe (27) zum Aufnehmen von einem Ende (18) des Stoßrahmens (3) aufweist.

5. Konstruktion gemäß Anspruch 3 oder 4, **dadurch gekennzeichnet, dass** die Enden (18) des Stoßrahmens auf einem Niveau angeordnet sind, welches über dem des Mittelabschnitts (15) des Stoßrahmens (3) ist.

6. Konstruktion gemäß einem der vorhergehenden Ansprüche, **dadurch gekennzeichnet, dass** der Stoßrahmen (3) Bereiche (19) verminderter Festigkeit aufseist.

7. Konstruktion gemäß einem der vorhergehenden Ansprüche, **dadurch gekennzeichnet, dass** der Stoßrahmen ein Rohr (3) aufweist.

8. Konstruktion gemäß Anspruch 7, **dadurch gekennzeichnet, dass** das Rohr (3) metallisch ist.

9. Konstruktion gemäß einem der vorhergehenden Ansprüche, **dadurch gekennzeichnet, dass** sie außerdem einen Kühlerschutz (13) zum Schutz eines Kühlers aufweist, wobei mindestens ein unterer Abschnitt (36) des Kühlerschutzes (13) zwischen dem Mittelabschnitt (15) des Stoßrahmens (3) und der Stoßfänger-Außenhaut (2) angeordnet ist.

10. Kraftfahrzeug, aufweisend ein vorderes Längsende (39), **dadurch gekennzeichnet, dass** das Kraftfahrzeug eine an dem vorderen Längsende (39) montierte Konstruktion (1) gemäß einem der vorhergehenden Ansprüche aufweist.

11. Konstruktionsverfahren eines Fahrzeugs gemäß Anspruch 10, **dadurch gekennzeichnet, dass** das Verfahren die Schritte aufweist:
- Bereitstellen einer Konstruktion (1) gemäß einem der Ansprüche 1 bis 9, dann
- Montieren der Konstruktion (1) an das vordere Ende (39) eines Kraftfahrzeugs.

## Claims

1. Assembly (1) for motor vehicles, comprising a bumper skin (2) and a rigid impact beam (3) of which at least a central portion (15) is arranged at the rear of the bumper skin in the direction of travel (M) of the vehicle to form a lower zone (55) for striking the tibia of a pedestrian, the bumper skin (2) comprising a front central part (6) and two lateral, parts (7) which form rearward continuations of the front central part (6), **characterised in that** the impact beam (3) is mounted on the lateral parts (7) of the bumper skin (2) .

2. Assembly according to claim 1, **characterised in that** the impacr beam (3) is mounted on each lateral part (7) via a reinforcing part (21) which is fixed in place laterally inside said lateral part (7).

3. Assembly according to claim 1 or 2, **characterised in that** the impact beam (3) comprises ends (18) by which it is mounted on the lateral parts (7) of the bumper skin (2).

4. Assembly according to claims 2 and 3 taken together, **characterised in that** each reinforcing part (21) comprises a sleeve (27) for receiving an end (18) of the impact beam (3).

5. Assembly according to claim 3 or 4, **characterised in that** the ends (18) of the impact beam-are situated at a level higher than that of the central portion (15) of .the impact beam (3).

6. Assembly according to one of the foregoing claims, **characterised in that** the impact beam (3) comprises zones (19) of lower strength.

7. Assembly according to one of the foregoing claims, **characterised in that** the impact beam comprises a tube (3).

8. Assembly according to claim 7, **characterised in that** the tube (3) is metallic.

9. Assembly according to one of the foregoing claims, **characterised in that** it also comprises a grille (13) for protecting a radiator, at least a lower part (36) of the grille (13) being arranged between the central portion (15) of the impact beam (3) and the bumper skin (2).

10. Motor vehicle comprising a front longitudinal end (39), **characterised in that** it comprises an assembly (1) according to one of the foregoing claims, mounted at the front longitudinal end (39).

11. Method of constructing a vehicle according to claim 10, **characterised in that** it comprises the steps of:
- providing an assembly (1) according to one of claims 1 to 9, and then
- joining said assembly (1) to the front end (39) of a motor vehicle.
